# NEW EUROPEAN PATENT SPECIFICATION

(11) **EP 1 332 655 B2**
(45) Date of publication and mention of the opposition decision: **20.03.2013**
(45) Mention of the grant of the patent: 12.12.2007
(21) Application number: 03010470.7
(22) Date of filing: 07.06.2000
(51) Int. Cl.: A01B 21/08

(54) **Agricultural machine**
Landwirtschaftliches Gerät
Appareil agricole

(30) Priority: 08.06.1999 SE 9902149
(43) Date of publication of application: 06.08.2003
(62) Divisional of application: 00939252.3
(73) Proprietor: Väderstad-Verken AB, 590 21 Väderstad (SE)
(72) Inventor: Gilsting, Gert, 59021 Väderstad (SE)
(74) Representative: HOFFMANN EITLE

(56) References cited:
- EP-A1- 0 619 937
- WO-A1-85/05246
- DE-A- 19 630 079
- DE-A1- 218 453
- FR-A- 1 079 859
- GB-A- 919 316
- SU-A1- 923 405
- US-A- 1 837 377
- US-A- 3 191 691
- US-A- 5 279 236

## Description

The invention relates to an agricultural machine comprising at least one elongate disc implement adapted to cultivate the ground, the disc implement comprising a first and a second beam arranged one behind the other in a predetermined essentially parallel position transverse to the direction of travel of the machine in a cultivation position, each beam being provided with a plurality of arms provided with at least one essentially vertically arranged separately rotatable essentially symmetrical disc, each arm being resiliently suspended from either of said first or second beams, the corresponding discs on the first and second beam being arranged in such a manner that the discs on the first beam are angled, in relation to the normal of the first and second beam, respectively and in the opposite direction to the corresponding discs on the second beam.

Such an agricultural machine is known from SE-B-449 548.

Conventionally, disc implements have been made so that the disc-bearing beams are arranged in either an X-shape or a V-shape. This means that the beams in an X-shaped arrangement diverge from one another from the center of the implement. In a V-shaped disc implement, the point of intersection of the beams is on one side of the implement (or just outside). Such disc implements are known from, for example, the Swedish patents SE-C-501 706 and WO 97/40660 of the applicant, and US-A-4 591 003.

In these known disc implements, when great working widths are to be cultivated, the disc implement is very long when the beams diverge from one another. An advantage of these conventional disc implements is, however, that cutting out (that is to say that the whole surface is cultivated and all plant roots are cut off) is in most cases complete at a cultivating depth of 50-60 mm.

Another embodiment is represented by the arrangement described in EP-B-0 428 198. In the disc implement disclosed, behind which a cultivator is arranged, the discs are arranged in a parallel manner on a beam. The discs have a preset angle in both the horizontal plane and the vertical plane. In an embodiment in Fig. 3 according to the above EP-B-0 428 198, an additional disc implement has been mounted behind the cultivator. The beams belonging to the two disc implements are parallel but beam 2 (implement 2) has discs which are angled in the opposite direction to the discs on the first implement.

A problem which has been encountered in this new type of machine is that it is difficult to make the front and the rear discs cut in a straight line in relation to one another under different circumstances. It is very important that this takes place as the purpose of the operation is in most cases not only cultivation but also effective weed control. In order to achieve the maximum effect in weed control, it is important to cut off all the roots of the weeds.

This difficulty is caused by inter alia different types of soil, working depth, speed of travel and resilience of the various parts of the machine.

When a disc implement is used, it is easy for a ridge to form between the discs, which remains after the discs have cut their U-shaped grooves.

The object of the present invention is to provide an agricultural machine of the type described in the introduction, which makes the front and the rear discs cut in a straight line in relation to one another.

These objects have been achieved by the agricultural machine as initially defined, wherein at least one adjustable displacement member is provided so that adjustement of the displacement member displaces one of the first and second beams relative to the other substantially in the longitudinal direction of the disc implement.

Preferably, said displacement member is adapted to lock the first and second beams in relation to one another in at least one predetermined position.

Suitably, the displacement member is a manually adjustable device, for example a rigging screw or a gear transmission.

The discs supported on the beams may be angularly adjustable in relation to the beams and to the fastening arrangement which consists of an arm arranged on the beam concerned. The discs can also be height-adjustable in relation to the beams.

The agricultural machine according to the present invention, is provided with at least one pair of disc implements having two disc-supporting beams arranged one behind the other in the direction of travel. These can in turn be arranged in front of a roller or another arrangement in the direction of travel. The function of the roller is to weigh down and thus control the disc implement in depth so that the disc implement thus penetrates to and works at the intended depth. The roller affords the advantage that the soil is recompacted after the discs have performed their cutting and breaking-up function. The disc implement can be divided into a number of sections arranged across the width, as will be seen below.

Optimum utilization of the invention is achieved in a combination of two or more of the above disc implements. The driver can thus always adjust the machine so that optimum cultivation and weed control are achieved.

In SU-923 405 is disclosed a roller provided with a front beam with roller rings, pressed down in the earth by the weight of the roller, in order to form a furrow for seeds supplied behind the front beam. A rear beam with roller rings buries the sown seeds. In order to adjust the rear roller rings, such that they do bury the seeds, the lateral position of the front and rear beams are adjustable.

The invention will now be described in greater detail with reference to the appended drawings, which show preferred embodiments.
Fig. 1 shows a disc implement towed by, for example, a tractor and with a roller connected to it, in the working position,
Fig. 2 shows a corresponding view from underneath,
Fig. 3 shows discs with shares,
Fig. 4 shows a detailed view of the share,
Fig. 5 shows a section of the disc implement with axial adjustment marked, and
Fig. 6 shows a disc implement towed by, for example, a tractor and with a roller connected to it, in the transport position.

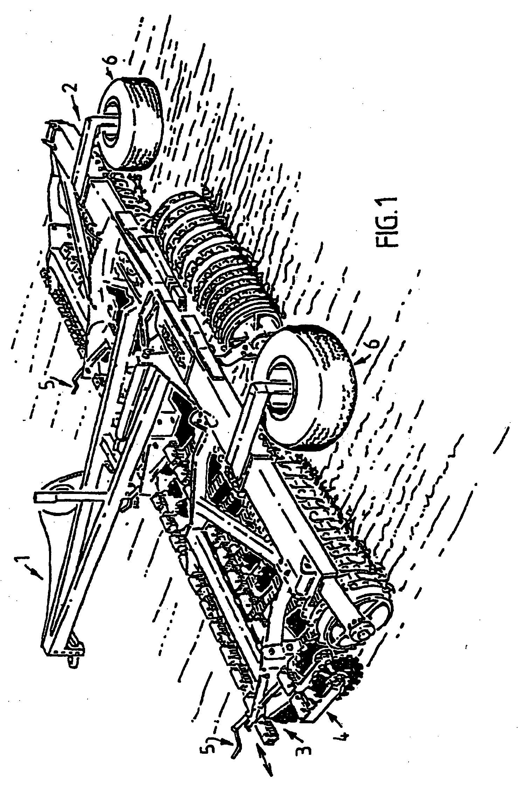

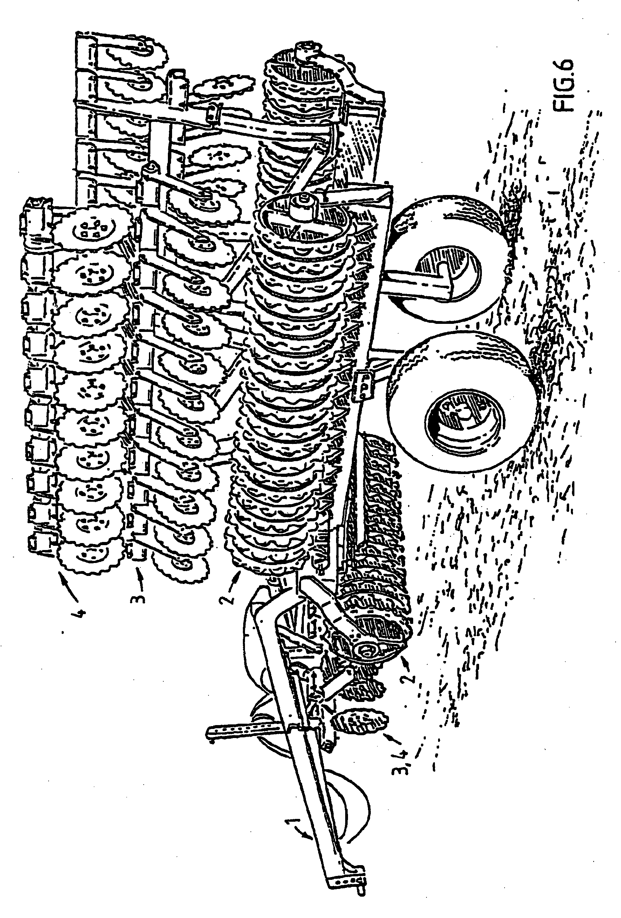

In Fig. 1, reference number 1 designates a towing arrangement for an agricultural machine, in which the invention is intended to be used. This towing arrangement is arranged pivotably on a roller 2 which is arranged behind the disc implement 3, 4 in the direction of travel. In this embodiment, the roller 2 is arranged so as to be capable of being adjusted into a transport position shown in Fig. 6. The manner in which this roller adjustment is effected is indicated in greater detail in SE-B-457 594 of the applicant. Transport wheels 6 intended for use in the transport position are also shown.

In the arrangement shown, the roller 2 is designed in three sections which can be rotated in relation to one another and to the towing arrangement. The operating devices 5 are intended for raising and lowering parts of the disc implement in relation to one another to adapt to the force exerted on them on the one hand by the tractive force applied and on the other hand by the effect exerted by the roller.

The disc implement is also designed in three sections in this embodiment for adaptation to the roller behind.

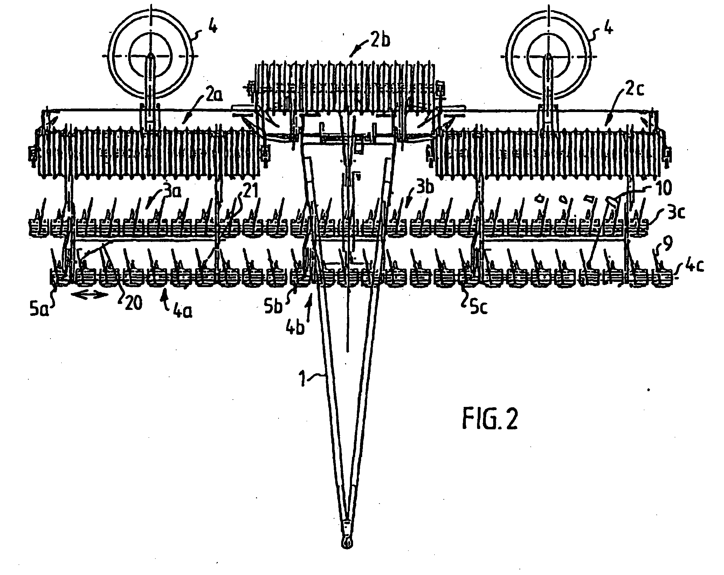

Fig. 2 shows the agricultural machine in Fig. 1 in a view from underneath. The same reference numbers as in Fig. 1 are used. The towing arrangement is designated by 1, the various sections of the roller by 2a - 2c, and the beams forming part of the sections of the disc implement by 3a - 3c and, respectively, 4a - 4c. The operating devices 5a - 5c are used as above for height adjustment within the respective disc implement section 3a and 4a, 3b and 4b, and 3c and 4c.

Each disc implement section in this embodiment is constructed in essentially the same manner. As can be seen in the figure, the two beams which support the discs and form part of each disc implement section can be displaced laterally in a parallel manner in relation to one another, that is to say the beam 3a, for example, can be displaced laterally in relation to the beam 4a and so forth.

In the example according to Fig. 1 and Fig. 2, the discs 9 are mounted on the square beams 3a - 3c, 4a - 4c by means of rubber springing and an arm. Other types of mounting are also possible provided that, when mounted on the beam, the discs can rotate freely as they work their way forward through the soil being cultivated. The discs 9 have a preset angle in both the horizontal plane and the vertical plane.

Depth adjustment of the discs can be effected by the axles being rotated or by the axles, together or individually, being moved vertically without any change in angle, for example by means of one or more parallelogram-shaped arrangements.

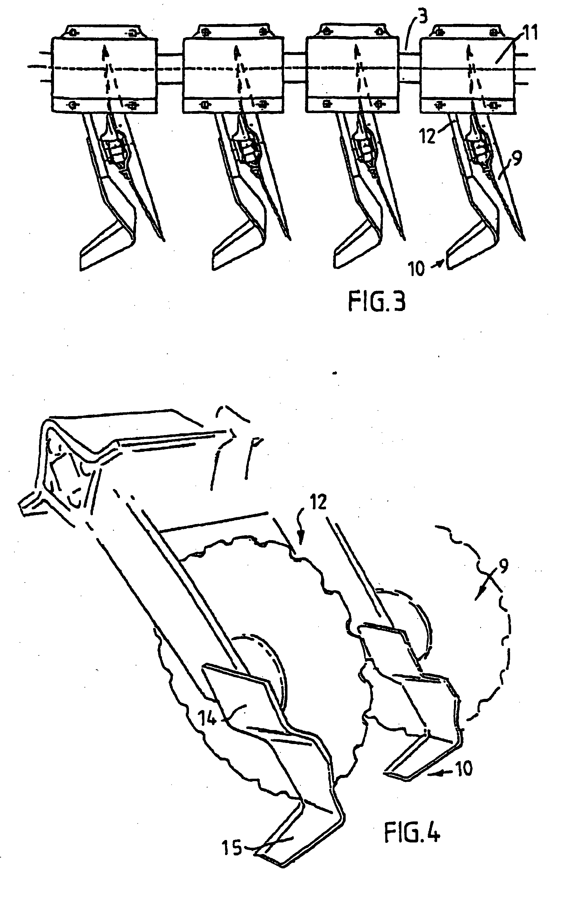

Reference number 10 indicates a share that will be explained in greater detail in connection with Fig. 3 and Fig. 4. The share is intended to be mounted between the discs. As they are intended to cultivate the soil ridge which can be formed between the disc grooves, the shares are suitably arranged so that at least one share will cultivate each soil ridge formed.

As can be understood, this may mean that, when two beams with their associated discs are arranged one behind the other, a share does not necessarily have to be included between every pair of adjacent discs, but, if appropriate, the shares can be arranged between every other pair of discs on one beam and, with a slight stagger, between every other pair of discs on the other beam.

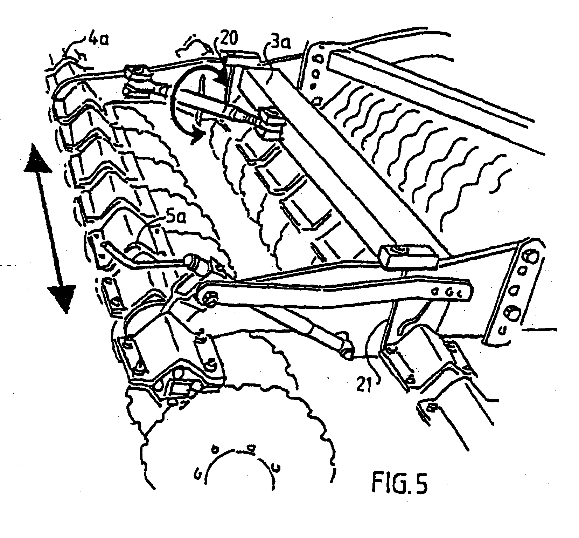

In that disc implement section designated by 3a, 4a, a member 20 for laterally displacing the two parts in relation to one another in a parallel direction is shown. In the drawing, this is shown in the form of a rigging screw. Equivalent arrangements such as hydraulic piston and cylinder arrangements, rack transmission arrangements etc. can also be used. A joint 21 is also shown, which is used when height adjustment is carried out between the two parts. These components are also shown in Fig. 5.

The displacement member 20 can be any machine element which fixes and locks the parts in relation to one another in the defined/selected manner.

Fig. 3 shows from above a portion of a beam 3 belonging to any one of the disc sections. On the beam, there are fastening arrangements 11 (not shown in detail) for an arm 12 which, at its lower end, supports the disc 9, in such a manner that it is freely rotatable in the plane of the disc about the mounting of the disc on the arm 12. The share 10 is also arranged on this arm.

Fig. 4 shows two discs 9 each arranged on a beam by 35 means of an arm 12, and associated shares 10.

As shown in Fig. 3 and Fig. 4, the share is arranged at the lower end of the arm 12 which, on its opposite side, supports the disc 9. It is possible for the share to be arranged in a permanent or removable manner. It is of course an advantage from the point of view of wear to be able to detach the share for replacement or maintenance, and also to be able, if so desired, to use the disc implement without shares mounted. It is also possible for shares to be mounted so that their height adjustment can be varied in relation to the discs which wear during use.

The share may be fastened to the beam by means of a separate arm or the like, or all the shares can be arranged on a separate beam which is arranged so as to interact with the beam which supports the discs.

It is important for the action of the share that it is located between adjacent discs and that it has a vertical part and an essentially horizontal part arranged so as to cut off rootlets in the interspace between the discs.

Fig. 5 shows a section consisting of two parallel disc implement parts 3a and 4a, and a member 20 for moving the disc implement parts laterally, which consists of a rigging screw in this embodiment. The drawing also shows the member 5a for relative height adjustment of the disc implement parts 3a and 4a. A joint necessary for this height adjustment is indicated by 21.

Fig. 6 shows, in transport position, the agricultural implement shown in Fig. 1 with a roller 2 which is arranged behind the disc implement 3, 4 in the direction of travel. The towing arrangement is designated by 1.

## Claims

1. Agricultural machine comprising at least one elongate disc implement adapted to cultivate the ground, the disc implement comprising a first and a second beam (3a, 4a; 3b, 4b; 3c, 4c) arranged one behind the other in a predetermined essentially parallel position transverse to the direction of travel of the machine in a cultivation position, each beam being provided with a plurality of arms (12) provided with at least one essentially vertically arranged separately rotatable essentially symmetrical disc (9), each arm (12) being resiliently suspended from either of said first or second beams by means of rubber springing, the corresponding discs on the first and second beam being arranged in such a manner that the discs on the first beam (3a; 3b; 3c) are angled, in relation to the normal of the first and second beam, respectively and in the opposite direction to the corresponding discs on the second beam (4a; 4b; 4c), **characterised in that** an adjustable displacement member (20) is provided so that adjustment of the displacement member (20) displaces one of the first and second beams (3a, 4a; 3b, 4b; 3c, 4c) relative to the other substantially in the longitudinal direction of the disc implement so as to make the discs on the first and second beam cut in a straight line in relation to one another.

2. Agricultural machine according to claim 1, wherein said displacement member is adapted to lock the first and second beams (3a, 4a; 3b, 4b; 3c, 4c) in relation to one another in at least one predetermined position.

3. Agricultural machine according to Claim 1 or 2, wherein the displacement member (20) is a manually adjustable device, for example a rigging screw or a gear transmission.

4. Agricultural machine according to anyone of claims 1 to 3, wherein the displacement member (20) is a pneumatically adjustable device remotely operable from the driver's cab.

5. Agricultural machine according to claim 1 or 2, wherein the displacement member (20) can be remotely operated from the driver's cab.

6. Agricultural machine according to anyone of the preceding claims, wherein the discs (9) have a predetermined angle in the horizontal plane, as well as in the vertical plane.

7. Agricultural machine according to anyone of the preceding claims, wherein a plurality of pairs of first and second beams (3a, 4a; 3b, 4b; 3c, 4c) are provided, each of said pair of first and second beams being provided with said displacement member (20).

## Patentansprüche

1. Landwirtschaftsmaschine umfassend wenigstens ein längliches Gerät mit Scheiben, das angepasst ist, um den Boden zu kultivieren, wobei das Gerät mit Scheiben, einen ersten und einen zweiten Balken (3a, 4a, 3b, 4b, 3c, 4c) umfasst, die in einer Kultivierungs-Position hintereinander in einer vorbestimmten, im Wesentlichen parallelen Position, quer zur Fahrrichtung der Maschine angeordnet sind, wobei jeder Balken mit einer Mehrzahl an Armen (12) ausgestattet ist, die mit wenigstens einer im Wesentlichen vertikal angeordneten, separat drehbaren, im Wesentlichen symmetrischen Scheibe (9) ausgestattet sind, wobei jeder Arm (12) entweder am ersten oder am zweiten Balken mittels einer Gummifedereung elastisch aufgehängt ist, wobei die entsprechenden Scheiben am ersten und zweiten Balken derart angeordnet sind, dass die Scheiben am ersten Balken (3a, 3b, 3c) in Bezug zur Normalen des ersten bzw. zweiten Balkens und in der entgegengesetzten Richtung zu, den entsprechenden Scheiben am zweiten Balken (4a, 4b, 4c) abgewinkelt sind, **dadurch gekennzeichnet,**
**dass** wenigstens ein einstellbares Verschiebungsglied (20) vorgesehen ist, so dass das Einstellen des Verschiebungsgliedes (20) einen der ersten und zweiten Balken (3a, 4a, 3b, 4b, 3c, 4c) relativ zum anderen ira Wesentlichen in der Längsrichtung des Gerätes mit Scheiben verschiebt, sodass sich die Scheiben auf dem ersten und zweiten Balken auf einer geraden Linie in Bezug zueinander schneiden.

2. Landwirtschaftsmaschine nach Anspruch 1, **dadurch gekennzeichnet, dass** das Verschiebungsglied angepasst ist, um den ersten und zweiten Balken (3a, 4a, 3b, 4b, 3c, 4c) in Bezug zueinander in wenigstens einer vorbestimmten Position fest zu legen.

3. Landwirtschaftsmaschine nach Anspruch 1 oder 2, **dadurch gekennzeichnet, dass** das Verschiebungsglied (20) eine von Hand einstellbare Vorrichtung ist, z.B. eine Einstellschraube oder ein Zahnradgetriebe.

4. Landwirtschaftsmaschine nach einem der Ansprüche 1 bis 3, **dadurch gekennzeichnet, dass** das Verschiebungsglied (20) eine pneumatisch einstellbare Vorrichtung ist, die von der Fahrerkabine aus fernbetrieben werden kann.

5. Landwirtschaftsmaschine nach Anspruch 1 oder 2, **dadurch gekennzeichnet, dass** das Verschiebungsglied (20) von der Fahrerkabine aus fernbetrieben werden kann.

6. Landwirtschaftsmaschine nach einem der vorhergehenden Ansprüche, **dadurch gekennzeichnet, dass** die Scheiben (9) sowohl in der horizontalen Ebene als auch in der vertikalen Ebene einen vorbestimmten Winkel aufweisen.

7. Landwirtschaftsmaschine nach einem der vorhergehenden Ansprüche, **dadurch gekennzeichnet, dass** eine Mehrzahl an Paaren von ersten und zweiten Balken (3a, 4a, 3b, 4b, 3c, 4c) vorgesehen sind, wobei jedes Paar von ersten und zweiten Balken mit dem Verschiebungsglied (20) ausgestattet ist.

## Revendications

1. Machine agricole comprenant au moins un outillage allongé à disques adapté pour cultiver le sol, l'outillage à disques comprenant un premier et un deuxième age (3a, 4a ; 3b, 4b ; 3c, 4c) placés l'un derrière l'autre en une position prédéterminée essentiellement parallèle, transversale à la direction de déplacement de la machine en position de culture, chaque age étant muni d'une pluralité de bras (12) munis d'au moins un disque essentiellement symétrique (9) rotatif séparément et disposé essentiellement verticalement, chaque bras (12) étant suspendu de manière élastique à l'un ou l'autre desdits premier et deuxième ages au moyen de ressorts en caoutchouc, les disques correspondants des premier et deuxième ages étant agencés de telle manière que les disques du premier age (3a ; 3b ; 3c) forment un angle, par rapport à la normale des premier et deuxième ages, respectivement, et dans la direction opposée aux disques correspondants du deuxième age (4a ; 4b ; 4c), **caractérisée en ce qu'**un élément de déplacement réglable (20) est prévu, de manière telle que le réglage de l'élément de déplacement (20) déplace l'un des premier et deuxième ages (3a, 4a ; 3b, 4b ; 3c, 4c) par rapport à l'autre, substantiellement dans la direction longitudinale de l'outillage à disques afin de faire réaliser par les disques des premier et deuxième ages une coupe en ligne droite l'un par rapport à l'autre.

2. Machine agricole selon la revendication 1, dans laquelle ledit élément de déplacement est adapté pour bloquer les premier et deuxième ages (3a, 4a ; 3b, 4b ; 3c, 4c) l'un par rapport à l'autre dans au moins une position prédéterminée.

3. Machine agricole selon la revendication 1 ou 2, dans laquelle l'élément de déplacement (20) est un dispositif réglable manuellement, par exemple un ridoir ou une transmission par engrenages.

4. Machine agricole selon l'une quelconque des revendications 1 à 3, dans laquelle l'élément de déplacement (20) est un dispositif réglable de manière pneumatique, actionnable à distance depuis la cabine du conducteur.

5. Machine agricole selon la revendication 1 ou 2, dans laquelle l'élément de déplacement (20) peut être actionné à distance depuis la cabine du conducteur.

6. Machine agricole selon l'une quelconque des revendications précédentes, dans laquelle les disques (9) ont un angle prédéterminé dans le plan horizontal, ainsi que dans le plan vertical.

7. Machine agricole selon l'une quelconque des revendications précédentes, dans laquelle est prévue une pluralité de paires de premier et deuxième ages (3a, 4a ; 3b, 4b ; 3c, 4c), chacune desdites paires de premier et deuxième ages étant munie dudit élément de déplacement (20).
